# EUROPÄISCHE PATENTSCHRIFT

(11) **EP 3 482 818 B1**
(45) Veröffentlichungstag und Bekanntmachung des Hinweises auf die Patenterteilung: **06.11.2019**
(21) Anmeldenummer: 17204935.5
(22) Anmeldetag: 01.12.2017
(51) Int. Cl.: B01D 65/10, G01M 3/00, G01N 15/00, G01M 3/28, G01N 15/08

(54) **VORRICHTUNG ZUM PRÜFEN VON MEMBRANEN**
DEVICE FOR TESTING MEMBRANES
DISPOSITIF DE CONTRÔLE DE MEMBRANES

(30) Priorität: 10.11.2017 DE 102017126489
(43) Veröffentlichungstag der Anmeldung: 15.05.2019
(73) Patentinhaber: MS2 Engineering und Anlagenbau GmbH, 73230 Kirchheim/Teck (DE)
(72) Erfinder: Kappel, Stefan, 73230 Kirchheim/Teck (DE); Epple, Sebastian, 72584 Hülben (DE); Ernst, Kati, 89231 Neu-Ulm (DE); Schäfer, Martin, 73230 Kirchheim/Teck (DE); Bombien, Günter, 73765 Neuhausen/Fildern (DE); Neumann, Nico, 73765 Neuhausen/Fildern (DE)
(74) Vertreter: Geitz Truckenmüller Lucht Christ

(56) Entgegenhaltungen:
- WO-A1-2016/176898
- GB-A- 2 322 873
- US-A- 4 536 971
- US-A- 4 979 390
- US-A- 5 535 616
- US-A1- 2010 221 837

## Beschreibung

Die vorliegende Erfindung betrifft generell eine Vorrichtung zum Prüfen von Membranen, umfassend einen oberen und einen unteren Stempel, zwischen denen eine zu testende Membran aufgenommen ist, wobei den Stempeln jeweils ein Flowfield zugeordnet ist, über welches die Membran mit jeweils einem Prüfmedium beaufschlagt wird und wobei den Stempeln jeweils die Flowfields einschließende umlaufende äußere Ringdichtungen zugeordnet sind, welche die Membran kontaktieren und einen Raum zwischen Flowfields und Membran einschließen.

Eine derartige Vorrichtung ist bereits aus der EP 1 839 364 B1 vorbekannt. Im Rahmen der dortigen Offenbarung ist es vorgesehen, im Speziellen eine Brennstoffzellenmembran zu prüfen, welche bereits mit Elektroden zu einer Membran-Elektroden-Einheit zusammengefügt ist. Die Membran-Elektroden-Einheit wird hierzu in die Vorrichtung eingespannt, wobei sie zwischen zwei Stempeln aufgenommen ist. In den Stempeln sind die anderen Teile einer Brennstoffzelle, also insbesondere die Dichtung, Flowfields mit Gaszuführung und -abführung sowie die Stromabnahme bzw. -messung, bereits integriert, so dass sich bei eingespannter Membran-Elektroden-Einheit eine vollständige Testbrennstoffzelle ergibt.

Die Leistungsfähigkeit einer Brennstoffzelle, unabhängig, ob in der praktischen Anwendung oder während der Entwicklungsphase in einem Teststand, ist von einer Vielzahl von Parametern abhängig, die unabhängig voneinander eingestellt werden können. Im Falle einer mit Wasserstoff und Luft betriebenen Brennstoffzelle sind diese Parameter z.B. Massenstrom, Temperatur, Feuchte und Druck von Luft und Wasserstoff, die Zelltemperatur und die der Zelle entnommene Stromstärke. Charakterisiert wird die Zelle normalerweise über die für den gegebenen Strom resultierende Spannung.

Zur Erhöhung der Spannung können diese Zellen zu einem Brennstoffzellenstack gestapelt und elektrisch in Reihe geschaltet werden. Bei Anwendungen in der Fahrzeugtechnik werden bis zu 500 Zellen in einem Stack gestapelt, mit dem Nachteil, dass bei Ausfall oder Leistungseinbruch bereits einer einzigen Zelle der ganze Stapel ausgetauscht werden muss. Die schlechteste Zelle bestimmt das Leistungsniveau des gesamten Stacks.

Eine Prüfung der Membran vor Einbau in die Brennstoffzellen ist daher wichtig und hilft dabei, Kosten in erheblichem Maße einzusparen. Wird allerdings auf diesem Wege festgestellt, dass die Membran-Elektroden-Einheit defekt bzw. fehlerhaft ist, so kann sie dennoch nur ausgesondert werden, eine Reparatur ist in aller Regel nicht möglich oder zu aufwändig.

Zentraler Bestandteil der Membran-Elektroden-Einheit ist die Membran, die auch abseits der Verwendung in Brennstoffzellen in zahlreichen Anwendungen eine wichtige Rolle spielt.

Vergleichbare Vorrichtungen sind aus dem Stand der Technik bekannt. So betrifft etwa die US 4,536,917 A ein Gerät zum Testen der Luftdurchlässigkeit poröser Medien, wie etwa Textilien, mit einer doppelten Abdichtung mittels zwei ineinander liegenden Dichtungsringen. In der Mitte der Dichtungsringe wird ein Luftstrom durch ein zwischen zwei Stempeln festgehaltenes poröses Medium geleitet und auf der anderen Seite abgeführt.

Eine weitere Lösung geht aus der US 5,535,616 A hervor, wobei hier das Medium über den Stempel verteilt wird und über eine ringförmige Vertiefung "collecting groove" austritt. Weiter auswärts liegt eine weitere ringförmige Vertiefung, "barrier groove", in die ein Sperrmedium eingebracht wird, das nach Innen und Außen strömt.

Schließlich ist aus der US 2010/221837 A1 ein Testsystem für eine Brennstoffzellenmembran bekannt, bei der einerseits Sauerstoff, andererseits Wasserstoff zugeführt werden. Die Dichtungskonfiguration ist hierbei jedoch nicht ausdrücklich beschrieben.

Vor diesem Hintergrund liegt der vorliegenden Erfindung die Aufgabe zu Grunde, eine Vorrichtung zum Prüfen von Membranen zu schaffen, welche eine Prüfung der Membran bereits vor ihrer Weiterverarbeitung ermöglicht und bei dem eine ortsaufgelöste Prüfung sowie eine Schadensanalyse und Performancemessungen möglich sind.

Dies gelingt durch eine Vorrichtung zum Prüfen von Membranen gemäß den Merkmalen des Anspruchs 1. Weitere, sinnvolle Ausgestaltungen einer solchen Vorrichtung können den sich anschließenden Unteransprüchen entnommen werden.

Erfindungsgemäß ist vorgesehen, dass eine Vorrichtung einen oberen Stempel und einen unteren Stempel aufweist, zwischen welchen die zu prüfende Membran aufgenommen wird. Hierbei erfolgt jedoch eine Abdichtung mithilfe einer zusätzlichen Mediendichtung, welche mit einem Sperrmedium zur Vermeidung eines Austritts der Prüfmedien gespült wird, so dass ein Fertigstellen der Membran-Elektroden-Einheit oder andere Schritte zur Weiterverarbeitung der zu prüfenden Membran nicht erforderlich sind. Prüfungen unter Druck können daher mit dieser Lösung durchgeführt werden. Aufgrund dieser Dichtungsart ist es auch nicht erforderlich, die Membran ganz in eine Testumgebung einzulegen, sie kann vielmehr von der Rolle, als Platte oder im Rahmen einer Teilprüfung auf der Fläche einer größeren Membran zwischen den Stempeln hindurchgeführt werden, so dass die Stempel die Membran an beliebigen Stellen einspannen und prüfen können. Hierdurch kann ein wesentlich kleinerer Stempel eingesetzt werden als üblich, alternativ können mehrere gleichartige Stempel im Verbund eingesetzt werden, welche die Membran an mehreren Stellen gleichzeitig testen. Wird an der Membran eine fehlerhafte Stelle gefunden, so kann diese beim Zuschnitt der einzelnen Membraneinheiten ausgelassen werden. Der Ausschuss bei den fertigen Membran-Elektroden-Einheiten kann hierdurch erheblich gesenkt werden.

Im Einzelnen weisen die Stempel jeweils ein Flowfield auf, welche die Membran von beiden Seiten mit Prüfmedien beschicken. Die Flowfields sind von äußeren Ringdichtungen umgeben, die eine Abdichtung zwischen dem jeweiligen Stempel und der Membran schaffen, wobei innerhalb der äußeren Ringdichtungen zusätzlich jeweils ein Sperrmedienkanal die Flowfields ebenfalls ringförmig umschließt und seinerseits ein Austreten von Prüfmedien verhindert.

Bereits zwischen den Mediendichtungen und den Flowfields kann entweichendes Prüfmedium vorzugsweise in einem Sammelkanal aufgefangen werden, über welchen dieses Leckagemedium wieder in den Prüfprozess zurückgeführt oder gesammelt werden kann. Der Sammelkanal ist hierfür zwar ebenfalls umlaufend angelegt, weist aber eine Absaugleitung auf, über die das Leckagemedium gezielt entnommen werden kann.

Hierbei kann vorzugsweise ferner eine zusätzliche umlaufende innere Ringdichtung vorgesehen sein, welche den Sammelkanal von dem Sperrmedienkanal trennt, so dass möglichst wenig Leckagemedium überhaupt bis zum Sperrmedienkanal vordringen kann. Auch eine weitere, innerste Ringdichtung kann bedarfsweise nochmals zwischen Flowfields und Sammelkanal eingesetzt werden.

Um einen unter allen Betriebsbedingungen definierten Bilanzraum zu erhalten, kann das Flowfield zweiteilig geführt werden. Es gibt dann ein, etwa quadratisches, inneres Flowfield und ein entsprechend geformtes äußeres Flowfield. Das innere Flowfield bildet den Bilanzraum. Der Stromabgriff des inneren und des äußeren Flowfields kann hierbei getrennt ausgeführt sein, indem die Flowfields voneinander elektrisch isoliert sind. Die an den Flowfields anfallenden elektrischen Ströme werden einzeln gemessen. Die Fläche des inneren Flowfields ist die Referenzfläche, über das äußere Flowfield werden die Einflüsse durch Randeffekte auf das innere Flowfield gering gehalten. Die Medien hingegen strömen über beide Flowfields.

Die Flowfields haben die Aufgabe, die Prüfmedien gleichmäßig auf der Membran oder der Membran-Elektroden-Einheit zu verteilen. Dazu können die Flowfields verschiedene Kanalstrukturen aufweisen, in der die Prüfmedien sich ausbreiten und den Bereich unmittelbar über der Membran bedecken können. Die Auslegung der Kanalgeometrie spielt hierbei eine wichtige Rolle, denn kleine Kanalgeometrien bedeuten eine gute Gleichverteilung über die einzelnen Kanäle sowie hohe Stromdichten. Gleichzeitig wird über die Kanäle aber auch das Produktwasser mit dem Medienstrom ausgetragen. Kleine Geometrien sind hierfür wiederum schädlich, da einzelne Kanäle verstopft werden können, was die Gleichverteilung der Prüfmedien auf der Membran stört.

Mit einigem Vorteil können die Flowfields auf der Rückseite, also der bestimmungsgemäß von der Membran abgewandten Seite Kühlkanäle aufweisen. Diese werden über getrennte Kühlkreisläufe mit Kühlmedium durchströmt und die entstehende Wärme auf diese Weise abgeführt. Der Wärmeübergang zwischen Kühlmedium und jeweiligem Flowfield ist kritisch, da die Temperaturgradienten möglichst gering sein sollten.

Vorteilhafterweise kann für die Herstellung der Flowfields Kupfer eingesetzt werden. Es hat sehr gute elektrische und thermische Eigenschaften. Allerdings kann Kupfer ohne geeigneten Korrosionsschutz nicht verwendet werden. Vorzugsweise weist, soweit die Flowfields also aus Kupfer hergestellt werden sollen, dieses eine geeignete Beschichtung auf.

Um einen genügenden Druck zwischen den beiden Stempeln aufzubauen, können diese mithilfe eines Spannzylinders gegeneinander verspannt werden um die Betriebsbedingungen der Membran nachzubilden und die erforderliche Dichtheit der Anordnung zu gewährleisten. Einer der beiden Stempel kann hierfür zudem als Drucktisch, der andere als Druckstempel ausgeführt werden, so dass nur einer der Stempel bewegt werden muss.

Die Druckkraft des Spannzylinders kann mit einigem Vorteil über eine Steuerung eingestellt werden. Die Druckkraft kann dann während der Messung an den Prüfdruck angepasst werden, um den Betrieb und die Dichtheit zu gewährleisten und gleichzeitig eine irreversible Schädigung der Membran während der Messung durch zu hohe Druckkraft zu verhindern. Insbesondere kann der Spannzylinder vorzugsweise pneumatisch, hydraulisch oder elektrisch betrieben sein.

Insbesondere kann, speziell bei der Prüfung von Membranen und Membran-Elektroden-Einheiten für Brennstoffzellen, der obere Stempel mit Wasserstoff als Prüfmedium, der untere Stempel mit Umgebungsluft als Prüfmedium betrieben werden. Als Sperrmedium kann mit einigem Vorteil Stickstoff zur Durchflutung des Sperrkanals der Mediendichtung eingesetzt werden. Es sind allerdings auch, je nach Anwendung, flüssige Prüfmedien und Sperrmedien einsetzbar.

Die Flowfields werden in den Stempeln mit einigem Vorteil von jeweils einem Grundrahmen pro Stempel zusammengehalten und befestigt. In die Grundrahmen sind auch die Sperrkanäle und Sammelkanäle sowie geeignete Aufnahmen für die Ringdichtungen eingelassen. Aufgrund der Anforderungen an die elektrische Leitfähigkeit, sowie die Korrosionsbeständigkeit können die Grundrahmen mit einigem Vorteil aus einem Kunststoff hergestellt sein, vorzugsweise eignet sich hierfür hochdichtes Polyvinylidenfluorid (PVDF-HD) oder Polyetheretherketon (PEEK). Diese Materialien weisen auch bei Prozesstemperaturen von bis zu 100 °C eine dauerhaft ausreichende Festigkeit auf und sind gut bearbeitbar.

Die vorstehend beschriebene Erfindung wird im Folgenden anhand eines Ausführungsbeispiels näher erläutert.

Es zeigen
- Figur 1: eine erfindungsgemäße Vorrichtung zum Prüfen von Membranen in einer perspektivischen Explosionsdarstellung von schräg oben, sowie
- Figur 2: die Vorrichtung gemäß Figur 1 in zusammengebautem Zustand mit eingelegter Membran in einer seitlichen Schnittdarstellung.

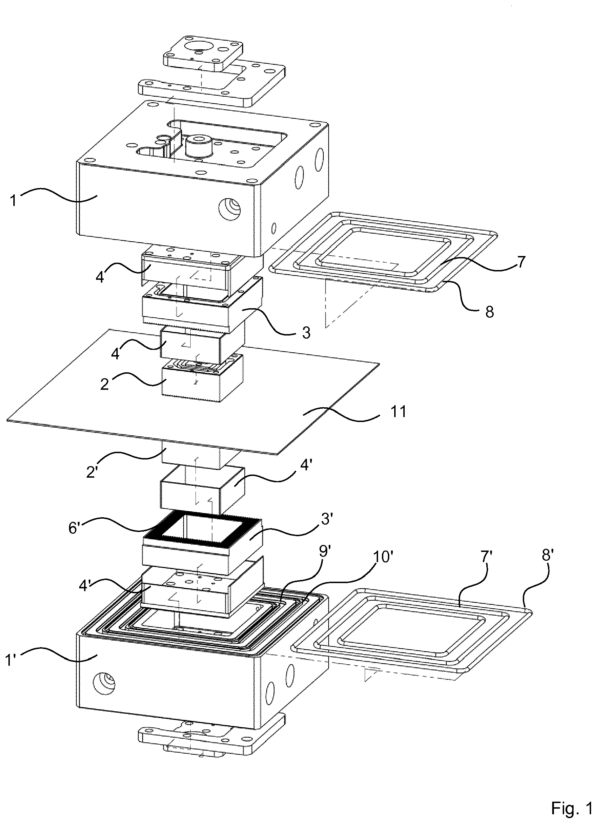

Figur 1 zeigt eine Vorrichtung zum Prüfen von Membranen 11 oder Membran-Elektroden-Einheiten in einer Explosionsdarstellung. In der Mitte zwischen zwei Stempeln wird hierbei eine Membran 11 hindurchgeführt, an der ein begrenzter Bereich in der Mitte der Fläche geprüft werden soll. Ein oberer Stempel weist dafür ein inneres Flowfield 2 auf, welches die Membran 11 mit Wasserstoff als Prüfmedium beschickt. Die Werte des Flowfields 2, z.B. die an diesem abgenommene Stromstärke, dient zur Bewertung des darunterliegenden Bereichs der Membran 11. Ein zusätzliches, äußeres Flowfield 3, welches das innere Flowfield 2 vollständig ringförmig umschließt, dient dazu, die Umgebungsbedingungen des inneren Flowfields 2 in den Randbereichen aufrecht zu erhalten und wird zwar gemeinsam mit diesem beschickt, aber separat gemessen. Die Flowfields 2, 3 sind von einer zweiteiligen Isolationsschicht 4 getrennt, deren erster Teil zwischen ihnen eingesetzt ist und deren zweiter Teil sie außen umgibt. Aufgenommen sind die Flowfields 2, 3 in einem Grundrahmen 1, der auch die Dichtung der Anordnung enthält.

Entsprechend symmetrisch dazu ist der untere Stempel aufgebaut, der als Prüfmedium Umgebungsluft auf die Membran 11 führt. Diese wird, wie auch der Wasserstoff in den Flowfields 2, 3, mithilfe von Kanalstrukturen 6, 6' auf der Membran 11 verteilt. Der Aufbau des unteren Stempels ist im Übrigen gleich.

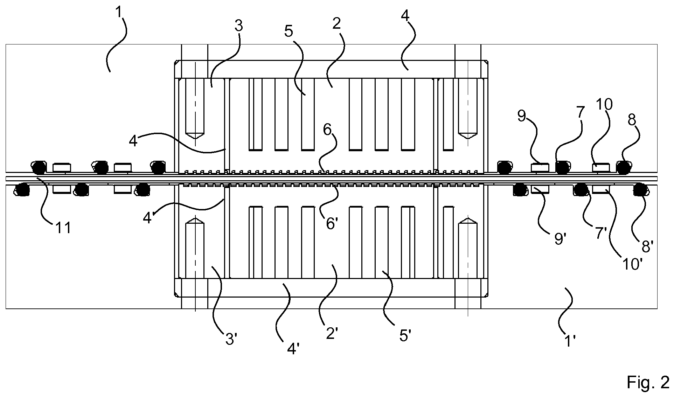

In Figur 2 zeigt sich das Dichtungskonzept im zusammengesetzten Zustand der Anordnung deutlich. Während die Prüfmedien durch Kanäle in den Flowfields 2, 2', 3, 3' an die Membran 11 herangeführt und an deren Oberfläche über die Kanalstrukturen 6, 6' gleichmäßig verteilt werden, sollen diese Prüfmedien nicht aus der Anordnung entweichen können. Hierzu weist die Anordnung umlaufende Ringdichtungen 7, 7', 8, 8' auf. Zwischen einer inneren Ringdichtung 7, 7' und einer äußeren Ringdichtung 8, 8' sind jeweils im oberen und im unteren Stempel Sperrmedienkanäle vorgesehen, die mit Stickstoff als Sperrmedium durchflutet werden. Innerhalb der inneren Ringdichtung 7, 7' sind zudem Sammelkanäle 9, 9' vorgesehen, in denen bis hierher vorgedrungenes Leckagemedium gesammelt und über Kanalleitungen abgesaugt wird. Hierdurch ist eine Abdichtung der Anordnung auch unter Druck möglich, ohne hierbei jedoch die Membran 11 vollständig in der Anordnung einzuschließen. Die Stempel können nacheinander an beliebigen Stellen der Membran 11 eingesetzt werden, da die Membran 11 durch die Prüfung nicht beeinträchtigt wird. Fehler können so genau lokalisiert und bei der weiteren Produktion ausgeschieden werden, während die Membran prinzipiell am laufenden Band oder als Platte zwischen den Stempeln hindurchgezogen und hierbei geprüft werden kann.

Vorstehend beschrieben ist somit eine Vorrichtung zum Prüfen von Membranen, welche aufgrund ihres Dichtungskonzeptes eine Prüfung der Membran bereits vor ihrer Weiterverarbeitung oder eine Schadensanalyse nach einem Ausfall ermöglicht und bei dem ferner eine ortsaufgelöste Prüfung möglich ist.

### BEZUGSZEICHENLISTE

- 1, 1': Grundrahmen
- 2, 2': inneres Flowfield
- 3, 3': äußeres Flowfield
- 4, 4': Isolationsschicht
- 5, 5': Kühlkanäle
- 6, 6': Kanalstruktur
- 7, 7': innere Ringdichtung
- 8, 8': äußere Ringdichtung
- 9, 9': Sammelkanal
- 10, 10': Sperrmedienkanal
- 11: Membran

## Patentansprüche

1. Vorrichtung zum Prüfen von Membranen (11), umfassend einen oberen Stempel und einen unteren Stempel, zwischen denen eine zu testende Membran (10) aufgenommen ist, wobei den Stempeln jeweils ein Flowfield (2, 2', 3, 3') zugeordnet ist, über welches die Membran (11) mit jeweils einem Prüfmedium beaufschlagt wird und wobei den Stempeln jeweils die Flowfields (2, 2', 3, 3') einschließende umlaufende äußere Ringdichtungen (8, 8') zugeordnet sind, welche die Membran (11) kontaktieren und einen Raum zwischen Flowfields (2, 2', 3, 3') und Membran (11) einschließen,
wobei die Stempel jeweils innerhalb ihrer äußeren Ringdichtungen (8, 8') die Flowfields (2, 2', 3, 3') einschließende ringförmige Sperrmedienkanäle (10, 10') aufweisen, wobei die Vorrichtung Mittel umfasst, so dass die Sperrmedienkanäle zur Ausbildung je einer Mediendichtung mit einem inerten Sperrmedium zur Vermeidung eines Austritts der Prüfmedien gespült werden können, innerhalb der Mediendichtungen der beiden Stempel jeweils ein weiterer ringförmiger, die Flowfields (2, 2', 3, 3') einschließender Sammelkanal (9, 9') zum Absaugen von Leckagemedium angeordnet ist und beiden Stempeln jeweils zwischen dem Sperrmedienkanal (10, 10') und dem Sammelkanal (9, 9') eine zweite umlaufende innere Ringdichtung (7, 7') zugeordnet ist.

2. Vorrichtung gemäß Anspruch 1, **dadurch gekennzeichnet, dass** die Flowfields (2, 2', 3, 3') der beiden Stempel jeweils in ein inneres Flowfield (2, 2') und ein äußeres Flowfield (3, 3') unterteilt sind, wobei das äußere Flowfield (3, 3') das innere Flowfield (2, 2') vollständig umschließt und von diesem durch eine Isolationsschicht (4, 4') getrennt und separat mit an einem Stromabnehmer angeschlossen ist.

3. Vorrichtung gemäß einem der Ansprüche 1 oder 2, **dadurch gekennzeichnet, dass** die Flowfields (2, 2', 3, 3') beider Stempel auf ihren bestimmungsgemäß der Membran (11) zugewandten Seiten jeweils eine Kanalstruktur 6, 6' zur Verteilung des Prüfmediums und zur Ableitung von anfallenden Gasen und Flüssigkeiten aufweisen.

4. Vorrichtung gemäß einem der vorhergehenden Ansprüche, **dadurch gekennzeichnet, dass** die Flowfields (2, 2', 3, 3') Kühlrippen und/oder mit einem Kühlmedium durchströmte Kühlkanäle (5, 5') aufweisen.

5. Vorrichtung gemäß einem der vorhergehenden Ansprüche, **dadurch gekennzeichnet, dass** die Flowfields (2, 2', 3, 3') aus einem elektrisch leitfähigen Material, vorzugsweise Kupfer, hergestellt sind.

6. Vorrichtung gemäß Anspruch 5, **dadurch gekennzeichnet, dass** die Flowfields (2, 2', 3, 3') mit einer korrosionshindernden Beschichtung versehen sind.

7. Vorrichtung gemäß einem der vorhergehenden Ansprüche, **dadurch gekennzeichnet, dass** die Stempel vermittels wenigstens einer Spannvorrichtung gegeneinander verspannbar sind.

8. Vorrichtung gemäß Anspruch 7, **dadurch gekennzeichnet, dass** die Druckkraft der wenigstens einen Spannvorrichtung einstellbar ist.

9. Vorrichtung gemäß Anspruch 7, **dadurch gekennzeichnet, dass** es sich um eine manuelle Spannvorrichtung handelt.

10. Vorrichtung gemäß einem der Ansprüche 7 oder 8, **dadurch gekennzeichnet, dass** die wenigstens eine Spannvorrichtung ein pneumatisch, hydraulisch oder elektrisch betriebener Spannzylinder ist.

11. Vorrichtung gemäß einem der vorhergehenden Ansprüche, **dadurch gekennzeichnet, dass** ein Stempel der Membran (11) Mittel zur Zuführung eines brennbaren Mediengemischs, vorzugsweise Wasserstoffs, und der andere Stempel Mittel zur Zuführung eines Mediengemischs, vorzugsweise Umgebungsluft, als Prüfmedium, aufweist.

12. Vorrichtung gemäß einem der vorhergehenden Ansprüche, **dadurch gekennzeichnet, dass** die Stempel jeweils aus einem Grundrahmen (1, 1') und den darin aufgenommenen Flowfields (2, 2', 3, 3') gebildet sind, wobei die Grundrahmen (1, 1') aus einem Kunststoff hergestellt sind.

13. Vorrichtung gemäß Anspruch 12, **dadurch gekennzeichnet, dass** als Kunststoff hochdichtes Polyvinylidenfluorid (PVDF-HD) oder Polyetheretherketon (PEEK) eingesetzt wird.

## Claims

1. A device for testing membranes (11), comprising an upper die and a lower die between which a membrane (10) [sic; (11)] to be tested is accommodated, wherein a flow field (2, 2', 3, 3') is respectively associated with the dies, via which the membrane (11) is acted on in each case by a test medium, and wherein the circumferential outer ring seals (8, 8') that enclose the respective flow fields (2, 2', 3, 3') are associated with the dies, and contact the membrane (11) and enclose a space between the flow fields (2, 2', 3, 3') and the membrane (11),
wherein the dies within their outer ring seals (8, 8') each have ring-shaped barrier medium channels (10, 10') that enclose the flow fields (2, 2', 3, 3'), wherein the device includes means so that the barrier medium channels for forming a media seal in each case may be flushed with an inert barrier medium to prevent the test media from escaping, and a further ring-shaped collecting channel (9, 9') that encloses the flow fields (2, 2', 3, 3') is situated within the media seals of the two dies for suctioning out leaked medium, and a second circumferential inner ring seal (7, 7') is associated with each of the two dies, between the barrier medium channel (10, 10') and the collecting channel (9, 9').

2. The device according to Claim 1, **characterized in that** the flow fields (2, 2', 3, 3') of the two dies are respectively divided into an inner flow field (2, 2') and an outer flow field (3, 3'), wherein the outer flow field (3, 3') completely encloses the inner flow field (2, 2'), and is separated from same by an insulation layer (4, 4') and is separately connected to a current collector.

3. The device according to one of Claims 1 or 2, **characterized in that** the flow fields (2, 2', 3, 3') of the two dies on their sides properly facing the membrane (11) each have a channel structure (6, 6') for distributing the test medium and for discharging gases and liquids that arise.

4. The device according to one of the preceding claims, **characterized in that** the flow fields (2, 2', 3, 3') have cooling ribs, and/or have cooling channels (5, 5') through which a cooling medium flows.

5. The device according to one of the preceding claims, **characterized in that** the flow fields (2, 2', 3, 3') are made of an electrically conductive material, preferably copper.

6. The device according to Claim 5, **characterized in that** the flow fields (2, 2', 3, 3') are provided with a corrosion-resistant coating.

7. The device according to one of the preceding claims, **characterized in that** the dies may be braced against one another by means of at least one clamping device.

8. The device according to Claim 7, **characterized in that** the pressure force of the at least one clamping device is adjustable.

9. The device according to Claim 7, **characterized in that** the device is a manual clamping device.

10. The device according to one of Claims 7 or 8, **characterized in that** the at least one clamping device is a pneumatically, hydraulically, or electrically operated clamping cylinder.

11. The device according to one of the preceding claims, **characterized in that** one die of the membrane (11) has means for supplying a combustible media mixture, preferably hydrogen, and the other die has means for supplying a media mixture, preferably ambient air, as the test medium.

12. The device according to one of the preceding claims, **characterized in that** the dies are each formed from a base frame (1, 1') and the flow fields (2, 2', 3, 3') accommodated therein, wherein the base frames (1, 1') are made of a plastic.

13. The device according to Claim 12, **characterized in that** high-density polyvinylidene fluoride (PVDF-HD) or polyether ether ketone (PEEK) is used as plastic.

## Revendications

1. Dispositif de test de membranes (11), ledit dispositif comprenant une matrice supérieure et une matrice inférieure entre lesquelles une membrane (10) ; (11)] à tester est reçue, un champ d'écoulement (2, 2', 3, 3') étant associé aux matrices, par le biais duquel la membrane (11) est soumise à un milieu de test, et des garnitures d'étanchéité annulaires extérieurs périphériques (8, 8') qui enferment respectivement les champs d'écoulement (2, 2', 3, 3') étant associées aux matrices, et venant en contact avec la membrane (11) et enfermant un espace situé entre les champs d'écoulement (2, 2', 3, 3') et la membrane (11),
les matrices comportant chacune à l'intérieur de leurs garnitures d'étanchéité annulaires extérieurs (8, 8') des conduits de milieu d'arrêt annulaires (10, 10') qui enferment les champs d'écoulement (2, 2', 3, 3'), le dispositif comprenant des moyens permettant de balayer les conduits de milieu d'arrêt avec un milieu d'arrêt inerte pour former une garniture d'étanchéité de milieu afin d'empêcher le milieu de test de sortir, et un autre conduit de collecte annulaire (9, 9') qui enferment les champs d'écoulement (2, 2', 3, 3') étant disposé à l'intérieur des garnitures d'étanchéité de milieu des deux matrices pour aspirer le milieu de fuite, et une deuxième garniture d'étanchéité annulaire intérieure périphérique (7, 7') étant associé à chacune des deux matrices entre le conduit de milieu d'arrêt (10, 10') et le conduit de collecte (9, 9').

2. Dispositif selon la revendication 1, **caractérisé en ce que** les champs d'écoulement (2, 2', 3, 3') des deux matrices sont chacun divisés en un champ d'écoulement intérieur (2, 2') et un champ d'écoulement extérieur (3, 3'), le champ d'écoulement extérieur (3, 3') entourant complètement le champ d'écoulement intérieur (2, 2') et étant séparé de celui-ci par une couche isolante (4, 4') et raccordé séparément à un collecteur de courant.

3. Dispositif selon l'une des revendications 1 ou 2, **caractérisé en ce que** les champs d'écoulement (2, 2', 3, 3') des deux matrices comportent, du côté de celles-ci qui est dirigé de manière appropriée vers la membrane (11), comporte une structure de conduit (6, 6') destinée à répartir le milieu de test et à évacuer des gaz et liquides produits.

4. Dispositif selon l'une des revendications précédentes, **caractérisé en ce que** les champs d'écoulement (2, 2', 3, 3') comportent des nervures de refroidissement et/ou des conduits de refroidissement (5, 5') traversés par un milieu de refroidissement.

5. Dispositif selon l'une des revendications précédentes, **caractérisé en ce que** les champs d'écoulement (2, 2', 3, 3') sont réalisés à partir d'une matière électriquement conductrice, de préférence du cuivre.

6. Dispositif selon la revendication 5, **caractérisé en ce que** les champs d'écoulement (2, 2', 3, 3') sont pourvus d'un revêtement résistant à la corrosion.

7. Dispositif selon l'une des revendications précédentes, **caractérisé en ce que** les matrices peuvent être serrées l'une contre l'autre à l'aide d'au moins un dispositif de serrage.

8. Dispositif selon la revendication 7, **caractérisé en ce que** la force de pression de l'au moins un dispositif de serrage est réglable.

9. Dispositif selon la revendication 7, **caractérisé en ce que** le dispositif est un dispositif de serrage manuel.

10. Dispositif selon l'une des revendications 7 ou 8, **caractérisé en ce que** l'au moins un dispositif de serrage est un cylindre de serrage à commande pneumatique, hydraulique ou électrique.

11. Dispositif selon l'une des revendications précédentes, **caractérisé en ce que** l'une des matrices de la membrane (11) comporte des moyens destinés à amener un mélange de milieux combustibles, de préférence de l'hydrogène, et l'autre matrice comporte des moyens destinés à amener un mélange de milieux, de préférence de l'air ambiant, comme milieu de test.

12. Dispositif selon l'une des revendications précédentes, **caractérisé en ce que** les matrices sont chacune formées d'un cadre de base (1, 1') et des champs d'écoulement (2, 2', 3, 3') reçus à l'intérieur de celui-ci, les cadres de base (1, 1') étant réalisés à partir d'une matière synthétique.

13. Dispositif selon la revendication 12, **caractérisé en ce que** du polyfluorure de vinylidène à haute densité (PVDF-HD) ou de la polyétheréthercétone (PEEK) sont utilisés comme matière synthétique.
